# EUROPEAN PATENT APPLICATION

(11) **EP 4 477 485 A1**
(43) Date of publication of application: **18.12.2024**
(21) Application number: 23179290.4
(22) Date of filing: 14.06.2023
(51) Int. Cl.: B60T 17/22, F16D 66/02

(54) **HEAVY VEHICLE BRAKE ASSEMBLY**

(71) Applicant: Meritor Heavy Vehicle Braking Systems (UK) Limited, Cwmbran, Gwent NP44 3XU (GB)
(72) Inventor: Cleary, Sean, Cwmbran, NP44 3XU (GB); Thomas, Paul A., Cwmbran, NP44 3XU (GB)
(74) Representative: Whitfield, Jack Stephen

(57) **Abstract**

A heavy-vehicle brake assembly is provided. The brake assembly includes: a braking element including friction material having an engaging face, the braking element configured to be actuated in a braking operation so that the engaging face of the friction material engages a braking surface to slow a heavy-vehicle; and a wear sensor assembly. The wear sensor assembly comprises: an ultrasonic sensor for emitting and detecting high-frequency sound waves; and a sacrificial member having an engaging face arranged to face the braking surface, wherein the sacrificial member is arranged such that sound waves emitted by the ultrasonic sensor pass through the sacrificial member; wherein the engaging face of the sacrificial member is flush with the engaging face of the friction material of the braking element and the sacrificial member is configured to actuate together with the braking element during the braking operation so that the engaging face of the sacrificial member also engages the braking surface.

## Description

### FIELD OF THE INVENTION

The present teachings relate to a heavy vehicle brake assembly, particularly to a wear sensor assembly for determining the wear of braking elements.

### BACKGROUND OF THE INVENTION

There are various methods for detecting wear in brakes for heavy vehicles. Such systems are an important safety feature because they help ensure that braking elements are replaced before they become too worn to provide effective stopping power. This can help prevent accidents and increase the overall safety of the vehicle. Additionally, by detecting wear early, such systems can help reduce maintenance costs by allowing brake pads to be replaced before they cause damage to other parts of the brake system, such as the rotors or drums.

In some brakes, a pad wear warning indicator (PWWI) device is provided. This is typically a device that is located within the friction material of a braking element of the brake. When the friction material has worn to a predetermined amount, the PWWI will come into contact with the braking surface (e.g. the surface of a brake rotor in a disc brake or an inner surface of a brake drum in a drum brake) and make a noise that acts as a signal to the user that the braking element should be replaced.

Alternatively, a more advanced solution is to include a constant wear sensor (CWS). However, known CWS systems measure an internal component of the brake to estimate total friction wear. For example, in a disc brake, a CWS will measure the total rotations of the adjuster mechanism to estimate total frictional wear, which is made up of the wear of the inboard brake pad, the outboard brake pad and the brake rotor.

It would be desirable, however, to provide live measurements of the wear of individual braking elements as this could help diagnose issues with the brake such as differential wear.

### SUMMARY OF THE INVENTION

A first aspect of the present teachings provides a heavy-vehicle brake assembly, comprising: a braking element including friction material having an engaging face, the braking element configured to be actuated in a braking operation so that the engaging face of the friction material engages a braking surface to slow a heavy-vehicle; and a wear sensor assembly comprising: an ultrasonic sensor for emitting and detecting high-frequency sound waves; and a sacrificial member having an engaging face arranged to face the braking surface, wherein the sacrificial member is arranged such that sound waves emitted by the ultrasonic sensor pass through the sacrificial member; wherein the engaging face of the sacrificial member is flush with the engaging face of the friction material of the braking element and the sacrificial member is configured to actuate together with the braking element during the braking operation so that the engaging face of the sacrificial member also engages the braking surface.

Ultrasonic (US) sensors are known for thickness measurement by monitoring the time delay between sending and receiving of a signal. However, it has been found that such US sensors are not suitable for measuring the remaining friction material of a braking element due to complexities introduced by there being a combination of materials (e.g. a steel backplate and a different friction material) as well as the isotropic nature of friction materials (typically a non-uniform compound with high metallic content). However, with the current arrangement, as the engaging face of the sacrificial member and the engaging face of the friction material are flush, they both engage the braking surface during a braking operation and wear at the same rate. Accordingly, sound waves emitted by the ultrasonic sensor through the sacrificial member are detected in order to provide data indicating the amount of material remaining in the sacrificial member. This data can then be used to determine the wear of the friction material, which will correspond to the wear of the sacrificial member. This can enable live monitoring of the wear of the individual braking elements without requiring any change to the composition of the friction material or the structure of the braking element. This arrangement can also be retrofitted to existing heavy-vehicle brakes.

The sacrificial member may be fixed relative to the braking element.

This helps to ensure that the sacrificial member and the braking element actuate together during the braking operation.

The sacrificial member may be fixed to the braking element.

Fixing the sacrificial member to the braking element further helps to ensure that the sacrificial member and the braking element actuate together during the braking operation. In addition, it means that the sacrificial member and braking element could be provided as a single assembly and could potentially help to restrict the use of unauthorised replacement braking elements, which are a safety issue.

The braking element may comprise a recess extending through the friction material. The sacrificial member may be located within this recess.

This location helps to ensure that the friction material and sacrificial element will both engage the braking surface during the braking operation. This location has been used in previous brake assemblies to locate a known pad wear warning indicator device and so is a convenient location as such a device may no longer be necessary and so the location can be repurposed by the sacrificial member for existing braking elements and no modification would be needed to manufacturing processes for producing new braking elements.

The recess in the friction material may be spaced from radial and circumferential edges of the braking element.

This helps to ensure that the sacrificial member contacts the braking surface and does not interfere with actuation of the brake during the braking operation.

The sacrificial member may be arranged between the ultrasonic sensor and the braking surface.

This helps to ensure that the high-frequency sound waves from the ultrasonic sensor pass through the sacrificial member and impact the engaging face of the sacrificial member, so some can be reflected back towards the ultrasonic sensor and detected to enable the amount of material removed from the sacrificial member in the direction of the braking surface can be determined.

The sacrificial member may be fixed to the ultrasonic sensor.

This enables the sacrificial member and ultrasonic sensor to be provided together as a single assembly and helps to ensure that the ultrasonic sensor is optimally aligned with respect to the sacrificial member.

The sacrificial member may be elongate and arranged with its longitudinal axis extending in a direction perpendicular to the engaging face of the friction material of the braking element.

This helps to ensure that the sacrificial member extends by a sufficient length to match the entire depth of the friction material of the braking element but minimises the cross-sectional area of the sacrificial member in contact with the braking surface relative to the area of friction material in contact with the braking surface so performance of the brake is not significantly negatively impacted.

The sacrificial member may be cylindrical. The sacrificial member may be located within a corresponding cylindrical recess of a housing arranged to locate the ultrasonic sensor.

This is a convenient shape to manufacture and helps a user to correctly install the sacrificial member during assembly as the exact rotational orientation about the longitudinal axis is immaterial.

The sacrificial member may be formed of a homogenous material.

This material helps to ensure that the sound waves from the ultrasonic sensor pass through the sacrificial member easily and can be detected without significant interference affecting the signal.

The material of the sacrificial member may be heat resistant. The material may have a similar compressibility as the friction material of the braking element.

This helps to ensure that the engaging face of the sacrificial member remains flush with the engaging face of the braking element and that the sacrificial member does not wear too quickly.

In a second aspect, a drum brake is provided comprising the heavy-vehicle brake assembly of the previous aspect. The braking surface is an inner surface of a drum rotationally fixed relative to a vehicle wheel. The braking element is a brake shoe having brake linings of friction material.

The drum brake may comprise a plurality of sacrificial members and a plurality of brake shoes. Each sacrificial member may correspond to one of the brake shoes.

With multiple sacrificial members, each sacrificial member corresponding to one of multiple brake shoes, differential wear can be detected, i.e. when the friction material of one brake shoe is wearing at a different rate to the friction material of one of the other brake shoes. This information is useful in preventing more serious safety issues, as it can be an indicator of a fault in the brake.

In a third aspect, a disc brake is provided comprising the heavy-vehicle brake assembly of the first aspect. The braking surface is a rotor rotationally fixed relative to a vehicle wheel and the braking element is a brake pad having friction material. The brake pad may have a backplate. The friction material may be fixed to the backplate.

The disc brake may comprise a plurality of sacrificial members and a plurality of brake pads, wherein each sacrificial member corresponds to one of the brake pads.

With multiple sacrificial members, each sacrificial member corresponding to one of multiple brake pads, differential wear can be detected, i.e. when the friction material of one brake pad is wearing at a different rate to the friction material of one of the other brake pads. This information is useful in preventing more serious safety issues, as it can be an indicator of a fault in the brake.

### BRIEF DESCRIPTION OF THE DRAWINGS

Embodiments of the invention will now be described with reference to the accompanying drawings, in which:
Figure 1A is a perspective view of a wear sensor assembly according to an embodiment of the invention;
Figure 1B is a side view of the wear sensor assembly of Figure 1A;
Figure 1C is a cross-sectional view of the wear sensor assembly of Figure 1A through the plane 1C-1C;
Figure 2 is a perspective view of a heavy vehicle disc brake;
Figure 3 is a cross-sectional view of the heavy vehicle disc brake of Figure 2 through the plane 2-2, including the wear sensor assembly of Figure 1A ;
Figure 4 is a close-up view of part of Figure 3;
Figure 5 is a perspective view of an alternative heavy vehicle disc brake;
Figure 6 is a cross-sectional view of the heavy vehicle disc brake of Figure 5 through the plane 6-6, including the wear sensor assembly of Figure 1A ;
Figure 7 is a perspective view of a heavy vehicle drum brake;
Figure 8 is a cross-sectional view of the heavy vehicle drum brake of Figure 7 through the plane 8-8, including the wear sensor assembly of Figure 1A ; and
Figure 9 is a close-up view of part of Figure 8;

### DETAILED DESCRIPTION OF EMBODIMENT(S)

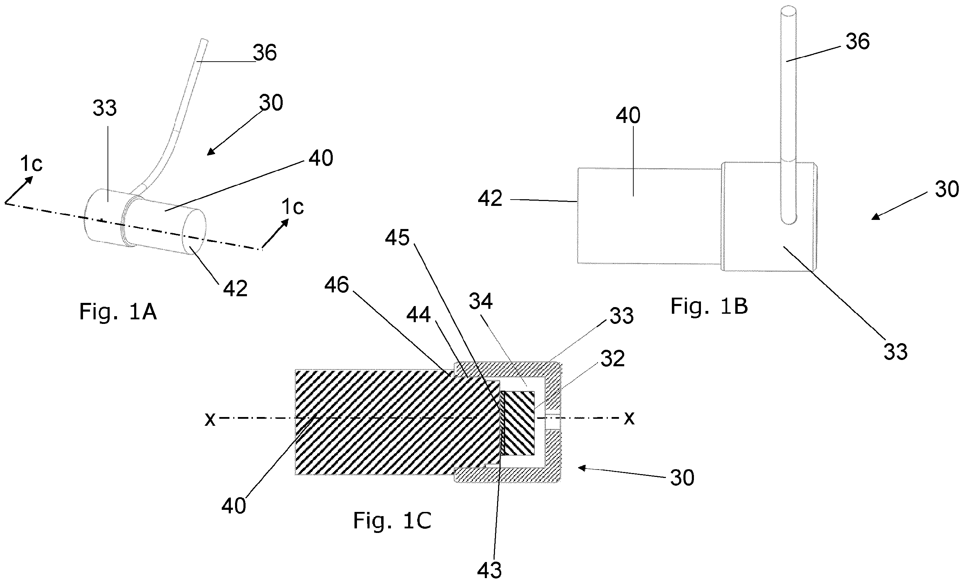

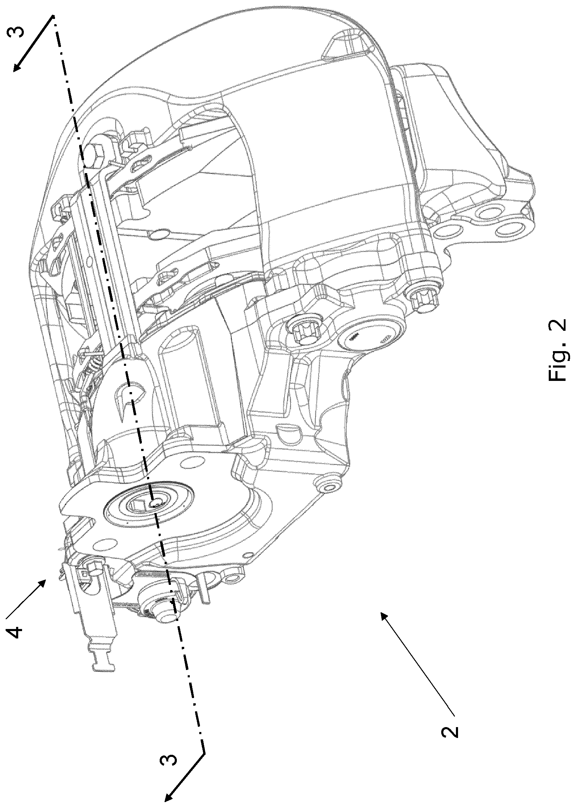

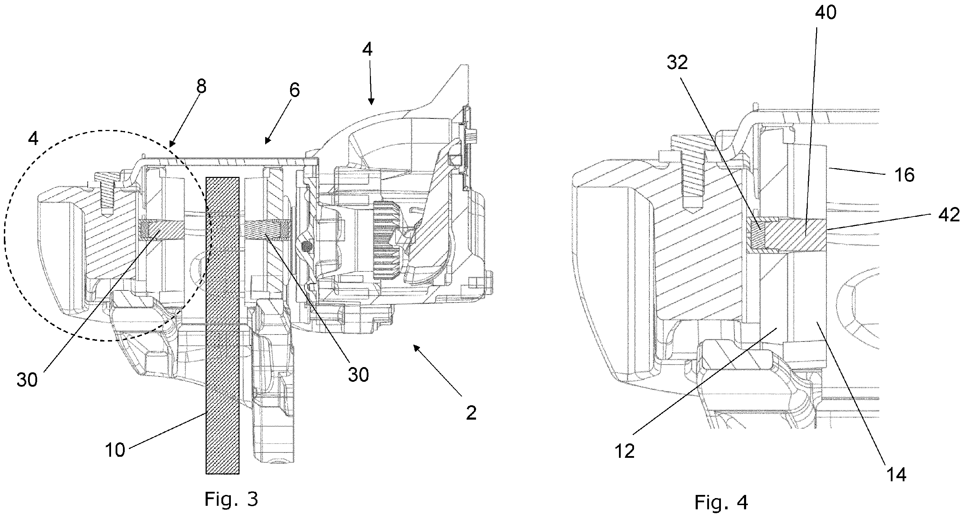

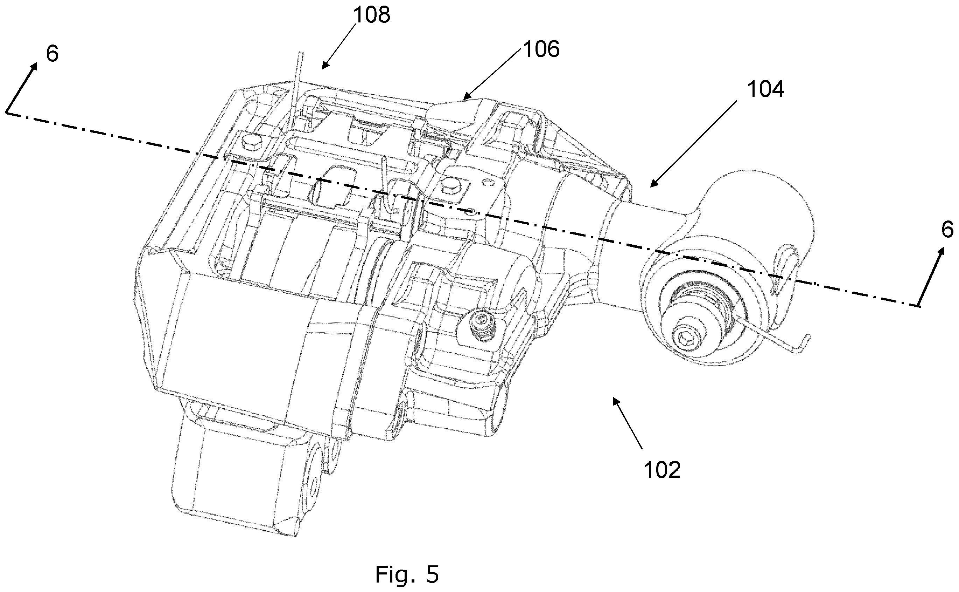

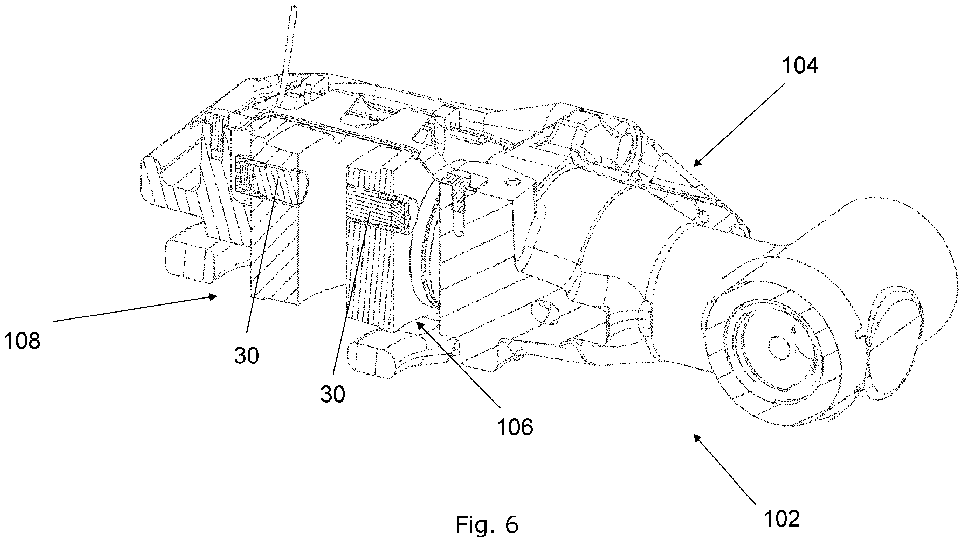

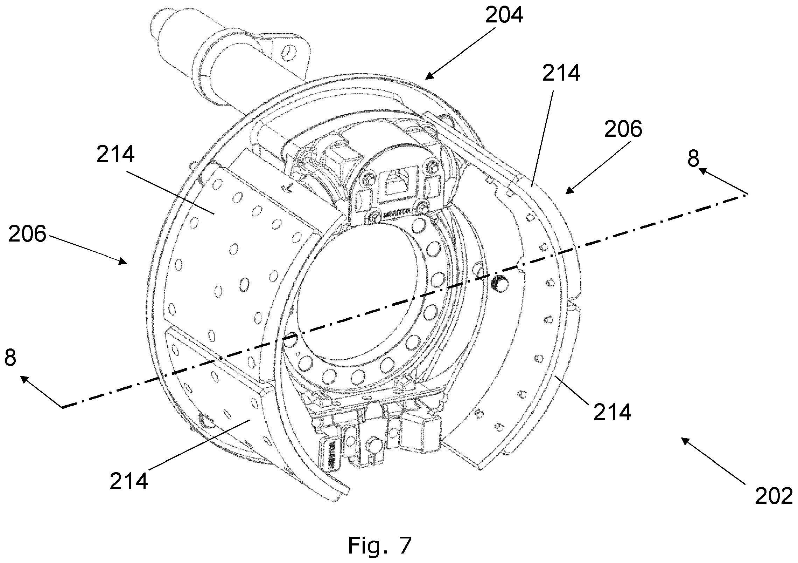

Figures 1A to 1C show a wear sensor assembly 30. The wear sensor assembly 30 is for determining the amount of wear of friction material of a braking element and can be used in a range of different heavy-vehicle brakes, as shown in the examples of Figures 2 to 9 and described in more detail below. Figures 2 to 4 show an air-actuated disc brake 2 including the wear sensor assembly 30, Figures 5 and 6 show a hydraulically-actuated disc brake 102 including the wear sensor assembly 30, and Figures 7 to 9 show a drum brake 202 including the wear sensor assembly 30

Looking firstly at Figures 1A to 1C, the wear sensor assembly 30 is shown in detail. In this embodiment, the wear sensor assembly 30 includes a housing 33, an ultrasonic sensor 32 for emitting and detecting high-frequency sound waves; and a sacrificial member 40. The ultrasonic sensor 32 is any suitable sensor including a transducer for producing high-frequency ultrasonic sound waves, which are emitted from the sensor and reflected back by hard surfaces or an interface between two different materials, e.g., in this embodiment by an interface between the sacrificial member 40 and the air. Examples of suitable transducers are piezoelectric transducers or electro-magnetic acoustic transducers (EMAT). The detected returning sound waves can be transmitted by a connecting wire 36, or wirelessly in other embodiments, to a suitable controller (not shown) where the data transmitted can be used to determine, for example, the amount of material in the sacrificial member 40, e.g., to determine, its current length. As will be explained below, such data can then be used to determine the amount of wear of the friction material of a braking element.

In this embodiment, the sacrificial member 40 is elongate with a longitudinal axis x-x. In this embodiment, the sacrificial member is cylindrical, i.e. it has a circular cross-section, though it will be appreciated that there are a range of different possible shapes that would still allow the sacrificial member 40 to achieve its function. For example, the sacrificial member 42 could have a square cross-section, triangular cross-section or any other suitable shape. In this embodiment, the sacrificial member 40 has a narrowed end portion 44 with a reduced outer diameter and lower cross-sectional area than the remainder of the sacrificial member 40. The end portion 44 has an end face 45 configured to face the ultrasonic sensor 32 as described in more detail below. A stepped portion 46 connects the end portion 44 to the remainder of the sacrificial member 40. In this embodiment, the stepped portion 46 and end portion 44 help the sacrificial member 40 to more easily locate within a recess 34 of the housing 33 In this embodiment, the recess 34 is a cylindrical cavity to correspond to the cylindrical sacrificial member 40, but it will be appreciated that the recess 34 could also be any suitable shape. In this embodiment, the sacrificial member 40 is fixed to the housing 33 with a suitable adhesive, but in other embodiments the sacrificial member 40 and the housing 33 could each have corresponding threads and be screwed to one another. Further, the ultrasonic sensor 32 is located within the housing so the sacrificial member 40, housing 33 and ultrasonic sensor 32 can all be provided as a single wear sensor assembly 30. Typically, the remainder of the recess 34 of the housing can be filled with an epoxy resin or similar to locate the ultrasonic sensor 32. A through bore in the end face of the housing 33 helps enable this, as the recess 34 can be filled and the excess exits through the through bore. However, it will be appreciated that in other embodiments the components could be all be provided separately, as long as the sacrificial member 40 is arranged between the ultrasonic sensor 32 and the braking surface of the brake, such that the sound waves from the ultrasonic sensor 32 pass through the sacrificial member 40 and are reflected back so they can be detected.

In this embodiment, a couplant 43 is provided between the ultrasonic sensor 32 and the end face 45 of the sacrificial member 40. In this embodiment, there is no air gap between the couplant 43 and the ultrasonic sensor 32 and the couplant 43 and the end face 45 of the sacrificial member 40. The couplant 43 acts as a bridge to help ensure the sound waves travel reliably into the sacrificial member 40 and the signal is not negatively affected by travelling through air. In this embodiment, the couplant 43 is a solid disc shape made from any suitable material. In other embodiments, however, the couplant 43 could be a viscous liquid, for example a silicon-based or glycol-based gel.

In this embodiment, the sacrificial member 40 is formed of a homogenous material as this helps to ensure that the sound waves from the ultrasonic sensor 32 pass through the sacrificial member 40 easily and can be detected without significant interference affecting the signal. Any suitable material could be used, but ideally the material of the sacrificial member should be heat resistant such that it can handle the high temperatures reached in a brake and have a similar compressibility as the friction material of the braking element. An example of a suitable material would be a thermoplastic such as Vespec^{®}.

At an end of the sacrificial member 40 opposite the end portion 44 is an engaging face 42. The engaging face 42 is substantially perpendicular to the longitudinal axis x-x. As described in more detail below, when installed in a brake, the sacrificial member 40 is arranged with its longitudinal axis x-x extending in a direction perpendicular to an engaging face of the friction material of the braking element. As also described in more detail below, this helps to ensure that the engaging face 42 of the sacrificial member 40 member faces the braking surface and is flush with an engaging face of the friction material of the braking element.

Figures 2 to 4 show a disc brake 2. The function of such a disc brake 2 is well-known so will not be described in detail but, briefly, a brake carrier locates braking elements to face braking surfaces. In this case, the braking surfaces are opposite sides of a rotor 10 that is rotationally fixed to a vehicle wheel, and the braking elements are an inboard brake pad 6 and an outboard brake pad 8. An actuating arrangement 4 engages the inboard brake pad 6 to urge it towards the rotor 10 and a reaction force slides a caliper relative to the brake carrier in order to urge the outboard brake pad 8 towards the rotor 10. The inboard brake pad 6 and the outboard brake pad 8 each include a backplate 12 that locates friction material 14. The friction material 14 has an engaging face 16 that is arranged to face the rotor 10 such that during a braking operation, when the inboard brake pad 6 and outboard brake pad 8 are moved towards the rotor 10, the engaging faces 16 of the inboard brake pad 6 and the outboard brake pad 8 engage the opposite surfaces of the rotor 10 to slow the vehicle.

Over time, the friction material 14 of each of the inboard brake pad 6 and the outboard brake pad 8 will wear, and it would be beneficial to know exactly when each brake pad 6, 8 should be replaced as well as when one of the brake pads 6, 8 is wearing more quickly than the other, as this could indicate a fault in the brake. To do this, in this embodiment a wear sensor assembly 30 is provided on either side of the rotor 10. Each sacrificial member 40 is arranged so that the engaging face 42 of the sacrificial member 40 is flush with the engaging face 16 of the friction material 14 of the inboard brake pad 6 or the outboard brake pad 8. The brake pad 6, 8 and the corresponding sacrificial member 40 are configured to actuate together during the braking operation so that the engaging face 42 of the sacrificial member 40 also engages the rotor 10. Therefore, as the friction material 14 wears, the sacrificial member 40 will wear at the same rate. Accordingly, sound waves emitted by the ultrasonic sensor 32 through the sacrificial member 40 will reflect back to the ultrasonic sensor 32 as they contact the engaging face 42, due to the interface between the material of the sacrificial member 40 and the air surrounding the sacrificial member 40. The reflected sound waves are detected by the ultrasonic sensor 32 in order to provide data indicating the time delay between the transmitting and receiving of the sound waves, which can indicate the amount of material remaining in the sacrificial member 40. This data can then be used to determine the wear of the friction material 14, as it will correspond to the wear of the sacrificial member 40, due to them being flush.

In this embodiment, the sacrificial member 40 is fixed to the brake pad 6, 8 by being located in a central region spaced from circumferential and radial edges of the brake pad 6, 8. In this embodiment, this central region comprises a recess 18 that extends through the friction material 14. In this embodiment, the recess 18 extends through the entire depth of the friction material in the axial direction, i.e. parallel to a central axis about which the rotor 10 rotates. In this embodiment, the recess 18 is of a circular cross-section to correspond to a cylindrical sacrificial member 40, but it could have any suitable cross-sectional shape. The recess 18 has been used in previous brake pads to locate a known pad wear warning indicator device, so the wear sensor assembly 30 could be retrofitted to existing brake pads 6, 8 in this location. It will be appreciated that in other embodiments, the ultrasonic sensor 32 and sacrificial member 40 could be located in any suitable location, provided the engaging face 42 of the sacrificial member 40 is flush with the engaging face 16 of the friction material 14 of the inboard brake pad 6 or the outboard brake pad 8 and the sacrificial member 40 and the inboard brake pad 6 or the outboard brake pad 8 actuate together during the braking operation.

To help prevent damage to the wear sensor assembly 30, it would be beneficial to help ensure that the load path through the sacrificial member 40 does not pass through the ultrasonic sensor 32 and cause damage to it. For example, the sacrificial member 40 could be elastic, or an alternative arrangement could be provided to ensure the load does not go into the ultrasonic sensor 32.

Figures 5 and 6 shown an alternative heavy vehicle brake. In this embodiment, a hydraulically-actuated disc brake 102 is shown, with an actuating arrangement 104 having hydraulically-actuated pistons for actuating an inboard brake pad 106 as well as a known parking brake arrangement for holding the brake 102 in the actuated position when required. The brake 102 also includes an outboard brake pad 108. As shown most clearly in Figure 6, like the embodiment of Figures 2 to 4, wear sensor assemblies 30 are provided on the inboard and outboard sides of the rotor (not shown).

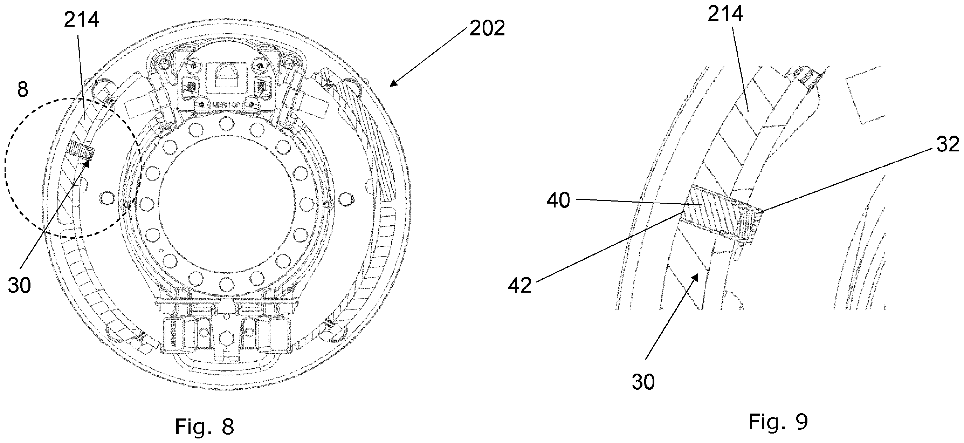

Figures 7 to 9 shown a further alternative heavy vehicle brake. In this embodiment, drum brake 202 is shown, with an actuating arrangement 204. In this embodiment, the braking elements are brake shoes 206 each having friction material 214. The operation of such a drum brake 202 is known, so will not be described in much detail but, briefly, during a braking operation the actuating arrangement 204 actuates the brake shoes 206 in a radially-outward direction such that the friction material 214 of each brake shoe engages an inner surface of a drum (not shown) that is rotationally fixed relative to a vehicle wheel, in order to slow the vehicle. As shown most clearly in Figure 9, like the embodiments of Figures 2 to 6, wear sensor assemblies 30 are provided facing the braking surface (in this case the inner surface of the drum) and are flush with an engaging face 216 of the friction material 214. Accordingly, each wear sensor assembly 30 can detect the wear of the sacrificial member 40 so that the amount of wear of the friction material 214 can be determined.

Although embodiments are described with multiple wear sensor assemblies 30, it will be appreciated that this may not always be necessary, and a single wear sensor assembly 30 may be sufficient.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A heavy-vehicle brake assembly, comprising:
a braking element including friction material having an engaging face, the braking element configured to be actuated in a braking operation so that the engaging face of the friction material engages a braking surface to slow a heavy-vehicle; and
a wear sensor assembly comprising:
an ultrasonic sensor for emitting and detecting high-frequency sound waves; and
a sacrificial member having an engaging face arranged to face the braking surface,
wherein the sacrificial member is arranged such that sound waves emitted by the ultrasonic sensor pass through the sacrificial member;
wherein the engaging face of the sacrificial member is flush with the engaging face of the friction material of the braking element and the sacrificial member is configured to actuate together with the braking element during the braking operation so that the engaging face of the sacrificial member also engages the braking surface.

2. The heavy-vehicle brake assembly of claim 1, wherein the sacrificial member is fixed relative to the braking element.

3. The heavy-vehicle brake assembly of claim 2, wherein the sacrificial member is fixed to the braking element.

4. The heavy-vehicle brake assembly of claim 3, wherein the braking element comprises a recess extending through the friction material, and the sacrificial member is located within this recess.

5. The heavy-vehicle brake assembly of claim 4, wherein the recess in the friction material is spaced from radial and circumferential edges of the braking element.

6. The heavy-vehicle brake assembly of any previous claim, wherein the sacrificial member is arranged between the ultrasonic sensor and the braking surface.

7. The heavy-vehicle brake assembly of claim 6, wherein the sacrificial member is fixed to the ultrasonic sensor.

8. The heavy-vehicle brake assembly of any previous claim, wherein the sacrificial member is elongate and arranged with its longitudinal axis extending in a direction perpendicular to the engaging face of the friction material of the braking element.

9. The heavy-vehicle brake assembly of claim 8, wherein the sacrificial member is cylindrical and located within a corresponding cylindrical recess of a housing arranged to locate the ultrasonic sensor.

10. The heavy-vehicle brake assembly of any previous claim, wherein the sacrificial member is formed of a homogenous material.

11. The heavy-vehicle brake assembly of claim 10, wherein the material of the sacrificial member is heat resistant and has a similar compressibility as the friction material of the braking element.

12. A drum brake comprising the heavy-vehicle brake assembly of any previous claim, wherein the braking surface is an inner surface of a drum rotationally fixed relative to a vehicle wheel and the braking element is a brake shoe having brake linings of friction material.

13. The drum brake of claim 12 comprising a plurality of sacrificial members and a plurality of brake shoes, wherein each sacrificial member corresponds to one of the brake shoes.

14. A disc brake comprising the heavy-vehicle brake assembly of any of claims 1 to 11, wherein the braking surface is a rotor rotationally fixed relative to a vehicle wheel and the braking element is a brake pad having friction material, optionally wherein the brake pad has a backplate and the friction material is fixed to the backplate.

15. The disc brake of claim 14 comprising a plurality of sacrificial members and a plurality of brake pads, wherein each sacrificial member corresponds to one of the brake pads.
